# EUROPÄISCHE PATENTANMELDUNG

(11) **EP 2 168 814 A2**
(43) Veröffentlichungstag der Anmeldung: **31.03.2010**
(21) Anmeldenummer: 09166585.1
(22) Anmeldetag: 28.07.2009
(51) Int. Cl.: B60Q 3/02

(54) **Einrichtung zur Innenbeleuchtung eines Kraftfahrzeugs mittels einer Dachkonsolen-Innenraumleuchte**

(30) Priorität: 26.09.2008 DE 102008042414
(71) Anmelder: Robert Bosch GmbH, 70442 Stuttgart (DE)
(72) Erfinder: Wuerz-Wessel, Alexander, 70599, Stuttgart (DE)

(57) **Zusammenfassung**

Bei einer Einrichtung zur Innenbeleuchtung eines Kraftfahrzeugs, mit einer Dachkonsole (1), in die zumindest eine Innenraumleuchte (L1-L4) integriert ist, wird vorgeschlagen, dass die zumindest eine Innenraumleuchte (L2, L3) als Leuchtmittel eine flächige strukturierte OLED aufweist, wobei das von der strukturierten OLED erzeugte Licht spektral einstellbar ist. Mittels einer elektronischen Steuerung (4) wird die OLED abhängig von einer von einem Fahrerassistenzsystem erfassten und bewerteten Fahrsituation spektral eingestellt, so dass die Innenbeleuchtung eine Warnfunktion annimmt.

## Beschreibung

### Stand der Technik

Die Erfindung betrifft eine Einrichtung zur Innenbeleuchtung eines Kraftfahrzeugs, mit einer Dachkonsole, in die zumindest eine Innenraumleuchte integriert ist.

Derartige, in die Dachkonsole eines Kraftfahrzeugs integrierte Innenbeleuchtungen sind z.B. aus der DE 103 34 218 A1 bekannt.

Dachkonsolen (Head-Units) dienen in einem Kraftfahrzeug zur Aufnahme von Innenraumleuchten, elektronischen Einrichtungen oder anderen Gegenständen und sind häufig als modulare Systeme ausgebildet. Die Dachkonsole ist meist im an die Windschutzscheibe angrenzenden Dachrahmenbereich, typischerweise mittig zwischen den Vordersitzen, angeordnet. Da der Bauraum der Dachkonsole, ohne diese störend wirken zu lassen, nicht beliebig vergrößert werden kann, konkurrieren die verschiedenen Funktionen wie Bedieneinheiten Schiebedach, Regensensor, Kameras für Fahrerassistenzsysteme, Brillenfach und Beleuchtungen um den begrenzten Bauraum. Dabei nehmen die oft mehrfach ausgelegten Beleuchtungen (Leselampen für Fahrer und Beifahrer, flächige Innenraumbeleuchtung, ambientes Licht usw.) einen erheblichen Bauraum ein, besonders dann, wenn konventionelle Leuchtmittel, wie Glühbirnen, eingesetzt werden. Konventionelle Konstruktionen aus Gehäuse, Glühbirne, Birnenfassung, Verdrahtung, Reflektor und Streuscheibe beanspruchen insbesondere eine erhebliche Bautiefe.

Die an die Dachkonsolenfunktion "Beleuchtung" gestellten Anforderungen nehmen jedoch eher noch weiter zu, da insbesondere der Wunsch besteht, die Farbe und Helligkeit des Beleuchtungslichts an die individuellen Wünsche der Fahrzeuginsassen und/oder die Fahrsituation anzupassen beziehungsweise als Warnfunktion einzusetzen. Aus der DE 10 2005 013 344 A1 ist eine z.B. in eine Dachkonsole einbaubare Beleuchtungseinrichtung zum Beleuchten mindestens eines Inneneinrichtungsteils eines Kraftfahrzeugs bekannt, die mindestens drei Leuchtmittel (z.B. LEDs) aufweist, die sich hinsichtlich der Farbe des von ihnen ausgesandten Lichts unterscheiden, wobei das Beleuchtungslicht durch Mischung des Lichts der Leuchtmittel gebildet wird. Die Leuchtmittel sind mit einer Ansteuereinrichtung verbunden, mit welcher die Lichtströme der einzelnen Leuchtmittel unabhängig voneinander verstellbar sind. Die Ansteuereinrichtung ist zum Einstellen des Farbwerts des Beleuchtungslichts mit einer einstellbaren Farbwahlbedieneinheit verbunden, die ein flächiges Bedienfeld aufweist. Die bekannte, farblich variable Beleuchtungseinrichtung ist insbesondere vom erforderlichen Bauraum her aufwändig.

Aus der WO 07 / 025574 ist eine Beleuchtungseinrichtung für ein türinnenseitiges Verkleidungselement eines Kraftfahrzeugs bekannt, welche bei geöffneter Fahrzeugtür ein Licht einer anderen Farbe und/oder Intensität als bei geschlossener Fahrzeugtür abstrahlt. Dabei ist es auch bekannt, entweder mindestens zwei Leuchtmittel unterschiedlicher Farbe oder mindestens ein zur wahlweisen Erzeugung von Licht unterschiedlicher Farbe geeignetes Leuchtmittel, beispielsweise eine OLED (Organic Light Emitting Diode), vorzusehen.

### Offenbarung der Erfindung

Die erfindungsgemäße Einrichtung zur Innenbeleuchtung eines Kraftfahrzeugs ist in Anspruch 1 gekennzeichnet. Weiterbildungen und bevorzugte Maßnahmen ergeben sich aus den Unteransprüchen.

Bei der erfindungsgemäßen Einrichtung zur Innenbeleuchtung eines Kraftfahrzeugs ist, über die gattungsgemäßen Merkmale hinaus, vorgesehen, dass die zumindest eine Innenraumleuchte als Leuchtmittel eine flächige strukturierte OLED aufweist, wobei das von der strukturierten OLED erzeugte Licht spektral einstellbar ist.

Die Erfindung ermöglicht eine flache (circa 1 mm dicke), formangepasste, flächige Innenraumbeleuchtung des Kraftfahrzeugs, die durch einen Fahrzeuginsassen - oder automatisch, von einer elektronischen Steuerung,- farblich in weitem Rahmen variiert werden kann. Die farblich variable Innenraumbeleuchtung auf OLED-Basis bietet gleichzeitig die Vorteile der Möglichkeit der designtechnischen Anpassung der Beleuchtung an das Fahrzeug und der Einsparung von Bauraum im Bereich der Dachkonsole.

Gemäß einer vorteilhaften Ausführungsform der Erfindung sind eine elektronische Steuerung, sowie Mittel zur Erfassung der Fahrbetriebssituation vorgesehen, so dass die spektrale Einstellung der OLED von der elektronischen Steuerung in Abhängigkeit von der durch die Mittel erfassten Fahrbetriebssituation anpassbar ist. In einer Weiterbildung dieser Ausführungsform wird bei stehendem Fahrzeug weißes Licht und im Fahren farbiges Licht erzeugt. Zur vorteilhaften Implementierung dieser Ausführungsformen ist vorgesehen, dass die Mittel zur Erfassung der Fahrbetriebssituation Ausgangsgrößen erzeugen, die die Geschwindigkeit oder den eingelegten Gang des Kraftfahrzeugs repräsentieren, und dass die elektronische Steuerung unter Anwendung dieser Ausgangsgrößen Steuersignale für die OLED erzeugt.

Gemäß einer als besonders vorteilhaft angesehenen Ausführungsform der Erfindung sind eine elektronische Steuerung, sowie ein Fahrerassistenzsystem zur Erfassung und Bewertung der Fahrsituation vorgesehen, so dass die spektrale Einstellung der OLED von der elektronischen Steuerung in Abhängigkeit von der durch das Fahrerassistenzsystem erfassten und bewerteten Fahrsituation anpassbar ist. Vorteilhaft kann bei einer positiv bewerteten Fahrsituation ein schwaches grünes Licht und bei einer negativ bewerteten Fahrsituation ein im gelblichen bis rötlichen Spektralbereich liegendes Licht erzeugt werden. Diese Ausführungsform kann dahingehend weitergebildet werden, dass die Innenraumleuchte als Ausstiegsbeleuchtung ausgebildet ist, dass das Fahrerassistenzsystem eine Vorrichtung zur Überwachung des Toten-Winkel-Bereichs des Rückspiegels umfasst, und dass die spektrale Einstellung der OLED davon abhängig ist, ob in Anbetracht der Fahrsituation das Öffnen einer Fahrzeugtür gefahrlos möglich ist. In Weiterbildung der letztgenannten Ausführungsform ist eine Ein- und Ausstiegsbeleuchtung vorgesehen, derart, dass beim Einsteigen eine weiße Einstiegsbeleuchtung und beim Aussteigen im Falle einer als gefahrlos erkannten Fahrsituation grünes Licht und im Falle einer als gefährlich erkannten Fahrsituation rotes Licht als Ausstiegsbeleuchtung geschaltet wird.

### Kurze Beschreibung der Zeichnungen

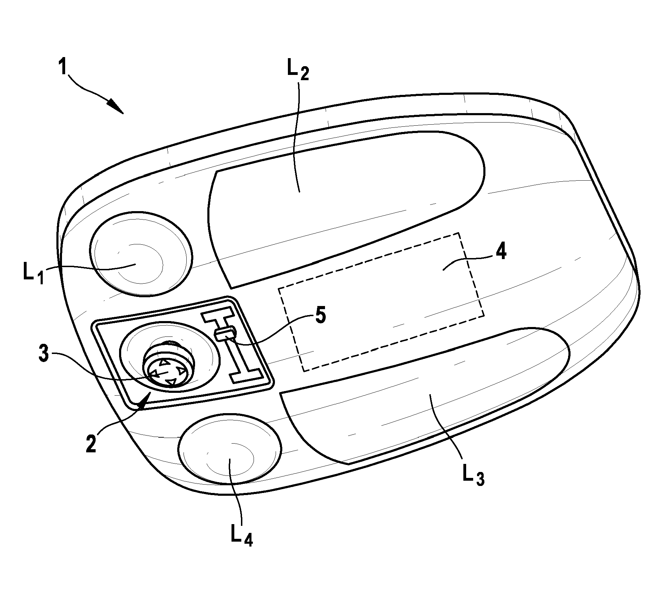

Die einzige Figur zeigt eine perspektivische Ansicht einer für die erfindungsgemäße Innenbeleuchtungseinrichtung vorgesehenen Dachkonsole für ein Kraftfahrzeug.

### Ausführungsform der Erfindung

Die in der Figur dargestellte Dachkonsole 1 für ein Kraftfahrzeug umfasst als Schalteinrichtung einen 4-Wege-Schalter 2 mit Bedienknopf 3, der zum individuellen Ein- und AusSchalten von vier in der Dachkonsole 1 integrierten Innenraumleuchten L₁-L₄ und einer weiteren, außerhalb der Dachkonsole angebrachten Leuchte (in der Figur nicht dargestellt) dient. Der 4-Wege-Schalter 2 ist nach Art eines Joysticks bewegbar, wobei die Innenraumleuchten L₂, L₃, die jeweils eine strukturierte OLED aufweisen, gemeinsam geschaltet sind. Bei geschalteten Leuchten L₂, L₃ kann deren Farbe im hier dargestellten einfachsten Fall mittels eines Schiebereglers 5 manuell eingestellt werden. Eine farbrelevante Strukturierung der OLEDs kann z.B. in an sich bekannter Weise durch Auswahl und Anordnung verschiedenfarbig emittierender organischer Materialien erreicht werden. Insbesondere bei einer OLED mit lateraler Strukturierung in verschiedene Farbbereiche eröffnet sich die Möglichkeit, nicht nur einzelne Farbbereiche zu schalten, also zwischen verschiedenen Farben umzuschalten, sondern die Helligkeit jeder Farbe separat zu verändern, indem der elektrische Stromfluss der entsprechenden Flächen geregelt wird. Dadurch lässt sich eine große Bandbreite unterschiedlicher Lichtstimmungen, beispielsweise auch unterschiedlicher Weißtöne, herstellen.

In der Figur ist auch eine elektronische Steuerung 4 angedeutet, die die in die Dachkonsole 1 integrierten OLEDs L₂, L₃ mit den entsprechenden Stromsignalen versorgt. Die elektronische Steuerung 4 ist mit dem Schieberegler 5 (oder einer anderen Spektralwahlbedienungseinheit, die auch außerhalb der Dachkonsole 1 angeordnet sein kann) und/oder mit Mitteln zur Erfassung der Fahrbetriebssituation verbunden. Insbesondere können die Mittel zur Erfassung der Fahrbetriebssituation Ausgangsgrößen erzeugen, die die Geschwindigkeit oder den eingelegten Gang des Kraftfahrzeugs repräsentieren, so dass die elektronische Steuerung 4 unter Anwendung dieser Ausgangsgrößen Steuersignale für die OLEDs erzeugt, die an diese weitergeleitet werden, so dass die gewünschten Farben mit den gewünschten Intensitäten erzeugt werden. In ähnlicher Weise kann die elektronische Steuerung 4 auch mit einem an sich bekannten Fahrerassistenzsystem zur Erfassung und Bewertung der Fahrsituation verbunden sein.

Die Anpassung der Farbe für die Innenraumbeleuchtung L₂, L₃ mithilfe der strukturierten OLEDs kann z.B. durch den Fahrer vorgenommen werden, beispielsweise per Schieberegler 5, Drehknopf oder Menüeinstellung.

Die Farbe, z.B. einer - anders als in der Figur dargestellt - als OLED ausgebildeten Beifahrerleselampe L₄, kann aber auch automatisch, z.B. in Abhängigkeit vom Fahrbetrieb angepasst werden. Im Stillstand kann etwa weißes Licht erzeugt werden, das beim Fahren den Fahrer aber stören könnte. Entsprechend wird im Fahren beispielsweise grünes oder rotes Licht erzeugt, welches den Fahrer bei der Sicht nicht behindert.

Die farblichen Variationsmöglichkeiten der erfindungsgemäßen Innenraumbeleuchtung können als HMI (Human Machine Interface) für Fahrerassistenzsysteme genutzt werden. So kann z.B. ein schwaches grünliches Licht dem Fahrer "Fahrzeugzustand in Ordnung" und/oder "Fahrzeugumgebung ungefährlich" signalisieren. Der Wechsel nach gelblicher/rötlicher Beleuchtung kann dann z.B. Störungen/Gefahrensituationen signalisieren.

Als weiteres Beispiel sei die farbliche Gestaltung einer Ein/Ausstiegsbeleuchtung in Kombination mit einer Blindspot-Überwachung auf Kamera-, Radar-, Lidar- oder Ultraschallbasis genannt. Die an sich bekannte Blindspot-Überwachung, die üblicherweise zur Überwachung des Toten-Winkels-Bereichs des Rückspiegels eingesetzt wird, kann gemäß einer Ausführungsform der Erfindung auch dafür verwendet werden, zu überprüfen, ob die Öffnung der Tür durch Fahrer oder Beifahrer ungefährlich möglich ist. Während beim Einsteigen z.B. eine weiße Beleuchtung realisiert wird, kann beim Aussteigen im Falle der Gefahrlosigkeit grünes Licht und im Falle der Gefahr rotes Licht geschaltet werden.

## Patentansprüche

1. Einrichtung zur Innenbeleuchtung eines Kraftfahrzeugs, mit einer Dachkonsole (1), in die zumindest eine Innenraumleuchte (L₁-L₄) integriert ist,
**dadurch gekennzeichnet,**
**dass** die zumindest eine Innenraumleuchte (L₂, L₃) als Leuchtmittel eine flächige strukturierte OLED aufweist, wobei das von der strukturierten OLED erzeugte Licht spektral einstellbar ist.

2. Einrichtung nach Anspruch 1, **dadurch gekennzeichnet, dass** eine elektronische Steuerung (4) vorgesehen ist, dass im Kraftfahrzeug Mittel zur Erfassung der Fahrbetriebssituation vorgesehen sind, und dass die spektrale Einstellung der OLED von der elektronischen Steuerung (4) in Abhängigkeit von der durch die Mittel erfassten Fahrbetriebssituation angepasst wird.

3. Einrichtung nach Anspruch 2, **dadurch gekennzeichnet, dass** bei stehendem Fahrzeug weißes Licht und im Fahren farbiges Licht erzeugt wird.

4. Einrichtung nach Anspruch 2 oder 3, **dadurch gekennzeichnet, dass** die Mittel zur Erfassung der Fahrbetriebssituation Ausgangsgrößen erzeugen, die die Geschwindigkeit oder den eingelegten Gang des Kraftfahrzeugs repräsentieren, und dass die elektronische Steuerung (4) unter Anwendung dieser Ausgangsgrößen Steuersignale für die OLED erzeugt.

5. Einrichtung nach Anspruch 1, **dadurch gekennzeichnet, dass** eine elektronische Steuerung (4) vorgesehen ist, dass im Kraftfahrzeug ein Fahrerassistenzsystem zur Erfassung und Bewertung der Fahrsituation vorgesehen ist, und dass die spektrale Einstellung der OLED von der elektronischen Steuerung (4) in Abhängigkeit von der durch das Fahrerassistenzsystem erfassten und bewerteten Fahrsituation angepasst wird.

6. Einrichtung nach Anspruch 5, **dadurch gekennzeichnet, dass** bei einer positiv bewerteten Fahrsituation einen schwaches grünes Licht und bei einer negativ bewerteten Fahrsituation ein im gelblichen bis rötlichen Spektralbereich liegendes Licht erzeugt wird.

7. Einrichtung nach Anspruch 5 oder 6, **dadurch gekennzeichnet, dass** die Innenraumleuchte (L₂, L₃)als Ausstiegsbeleuchtung ausgebildet ist, dass das Fahrerassistenzsystem eine Vorrichtung zur Überwachung des Toten-Winkel-Bereichs des Rückspiegels umfasst, und dass die spektrale Einstellung der OLED davon abhängig ist, ob in Anbetracht der Fahrsituation das Öffnen einer Fahrzeugtür gefahrlos möglich ist.

8. Einrichtung nach Anspruch 7, **dadurch gekennzeichnet, dass** eine Ein- und Ausstiegsbeleuchtung vorgesehen ist, und dass beim Einsteigen eine weiße Einstiegsbeleuchtung und beim Aussteigen im Falle einer als gefahrlos erkannten Fahrsituation grünes Licht und im Falle einer als gefährlich erkannten Fahrsituation rotes Licht als Ausstiegsbeleuchtung geschaltet wird.
